# EUROPÄISCHE PATENTSCHRIFT

(11) **EP 4 352 577 B1**
(45) Veröffentlichungstag und Bekanntmachung des Hinweises auf die Patenterteilung: **30.04.2025**
(21) Anmeldenummer: 22764814.4
(22) Anmeldetag: 19.08.2022
(51) Int. Cl.: G05B 19/404, G05B 19/416

(54) **VERFAHREN ZUM BETREIBEN EINER WERKZEUG- UND/ODER PRODUKTIONSMASCHINE**
METHOD FOR OPERATING A TOOL AND / OR PRODUCTION MACHINE
PROCÉDÉ DE FONCTIONNEMENT D'UN OUTIL ET/OU D'UNE MACHINE DE PRODUCTION

(30) Priorität: 30.09.2021 EP 21200044
(43) Veröffentlichungstag der Anmeldung: 17.04.2024
(73) Patentinhaber: Siemens Aktiengesellschaft, 80333 München (DE)
(72) Erfinder: BRETSCHNEIDER, Jochen, 88696 Owingen (DE); SCHÄFERS, Elmar, 90763 Fürth (DE); SPORER, Gerhard, 91207 Lauf (DE)
(74) Vertreter: Siemens Patent Attorneys
(86) Internationale Anmeldenummer: PCT/EP2022/073176
(87) Internationale Veröffentlichungsnummer: WO 2023/051999

(56) Entgegenhaltungen:
- EP-A2- 3 470 943
- US-A1- 2019 126 474

## Beschreibung

Die Erfindung betrifft ein Verfahren zum Betreiben einer Werkzeug- und/oder Produktionsmaschine.

Werkzeug- und/oder Produktionsmaschinen sind zur Bearbeitung von Werkstücken ausgebildet. Es können Bauteile für verschiedene Bereiche geschaffen werden.

Eine genaue bzw. feine Bearbeitung ist beispielsweise im Werkzeug- und Formenbau nötig. Z. B. bei der Herstellung von Formen für PET-Flaschen oder Legobausteinen sind genaue Formen wichtig.

Ferner ist eine hohe Fertigungsgenauigkeit bei beispielsweise optischen Komponenten wie Brillengläsern, Objektiv- bzw. Okularbauteile und Komponenten für Teleskopspiegel, Fotoapparate und Mikroskope nötig.

Ebenso ist eine hohe Fertigungsgenauigkeit auch in anderen Bearbeitungstechnologien notwendig wie bspw. beim Drehen von Pumpenkolben, Synchronrädern, Einspritzdüsen oder Lagerbüchsen.

Eine Feinbearbeitung zielt auf eine sehr hohe Bearbeitungsgenauigkeit und eine sehr hohe Oberflächengüte am Bauteil bzw. Werkstück ab.

Beispiele dieser Feinbearbeitung sind beispielsweise ein Schlichtvorgang beim Fräsen im Werkzeug-Formenbau oder Fein- oder Feinstschlichten oder auch Fein- bzw. Präzisionsdrehen von Drehteilen.

Oftmals erfolgt ein Schlichten nach einem Schruppen mit dem Ziel, die geforderte Oberflächengüte sowie Maß- und Formgenauigkeit zu erreichen. Im Zusammenhang mit den Genauigkeitsanforderungen an das Werkstück sind die Begriffe Schlichten, Fein- bzw. Feinstschlichten der Fachwelt bekannt.

In der Regel dient das Schlichten einer End- oder Fertigbearbeitung, jedoch kann auch ein darauffolgender Fertigungsschritt, wie beispielsweise ein Polieren, erforderlich sein. Die Verbesserungen erfolgen z. B. durch Herabsetzen der Prozesskräfte sowie durch Verwendung sehr genauer Maschinen und Werkzeuge. Dies ist jedoch sehr kostenintensiv.

Treten beim Schlichten unerwünschte Schwingungen an einer Bearbeitungsstelle zwischen Werkzeug und Werkstück auf, so wirkt sich dies negativ auf Qualität und Oberflächengüte aus. Dies führt dazu, dass eine aufwändige und teure manuelle Nacharbeit, z. B. Polieren, nötig ist. Dies führt zur Erhöhung von Kosten sowie einer Durchlaufzeit.

Die US 2019/126474 A1 beschreibt ein Verfahren und eine Vorrichtung für eine rechnergestützte Bewegungsmaschine, die iterativ einen numerischen "Ruck", die Bewegungsableitung der Beschleunigung, unter Verwendung von Echtzeit-Rückkopplung von einem bewegungsgesteuerten System berechnet, um sowohl eine gewünschte Position als auch eine gewünschte Geschwindigkeit eines nächsten Wegpunkts zu erreichen. Die Ausgabe der Bewegungsmaschine ist nur die gewünschte Beschleunigung, die dann an einen Motortreiber weitergegeben wird, ohne dass dazwischenliegende Berechnungen von Position oder Geschwindigkeit erforderlich sind. Eine zweite, interne Rückkopplungsschleife sorgt für die Aufrechterhaltung der gewünschten Beschleunigung oder des Drehmoments an der Motorwelle auf der Grundlage der Beschleunigungsausgabe der Bewegungsmaschine, die nichtlineare Korrekturtabellen verwenden kann. Wegpunkte, die sowohl die Position als auch die Geschwindigkeit umfassen, sind Eingaben für die Bewegungsmaschine. Die Zeit bis zum nächsten Wegpunkt wird berechnet und nicht als Eingabe bereitgestellt. Die Optimierung der Bewegungen zum nächsten Wegpunkt basiert auf der sanftesten Geschwindigkeitsänderung während der Bewegung. Zu den Ausführungsformen gehören mechanische, zweiachsige SCARA-Armbewegungssysteme.

Die EP 3470943 A2 beschreibt ein Verfahren zur Berechnung von Führungsgrößen für interpolierend fahrende Einzelachsen einer Präzisionsmaschine auf Basis einer gegebenen 3D Werkzeugbahn, bei dem zuerst für sämtliche Punkte der Werkzeugbahn offline unter Annahme einer frei gewählten Bahngeschwindigkeit oder Einzelachsgeschwindigkeit die Geschwindigkeits-, Beschleunigungs- und Ruckprofile sämtlicher interpolierenden Achsen zusammenhängend und ohne Vorgabe von Grenzwerten berechnet werden und danach auf Bereichen der 3D Werkzeugbahn Geschwindigkeits-, Beschleunigungs- oder Ruckprofile verändert werden.

Der Erfindung liegt die Aufgabe zugrunde, eine hohe Oberflächengüte bei hoher Produktivität zu erreichen.

Die Lösung der Aufgabe gelingt durch Anspruch 1, d. h. ein Verfahren zum Betreiben einer Werkzeug- und/oder Produktionsmaschine mit folgenden Schritten:
- Vergleichen wenigstens eines Lagesollwerts einer Maschinenachse und/oder eines Tool Center Points mit einem Lageistwert und/oder
- Vergleichen wenigstens einer Sollgeschwindigkeit der Maschinenachse und/oder des Tool Center Points mit einer Istgeschwindigkeit und/oder
- Vergleichen wenigstens einer Sollbeschleunigung der Maschinenachse und/oder des Tool Center Points mit einer Istbeschleunigung,
- Bilden mindestens eines Güteistwerts auf Basis des Vergleichs bzw. der Vergleiche, wobei ein Differenzsignal aus den Lagesollwerten und den Lageistwerten und/oder aus den Sollgeschwindigkeiten und den Istgeschwindigkeiten und/oder aus den Sollbeschleunigungen und den Istbeschleunigungen über einen bestimmten Zeitraum ermittelt und das Differenzsignal einem Verfahren einer Signalanalyse zugeführt werden, wobei anhand der Signalanalyse ermittelte Größen in den Güteistwert (Gist) einfließen,
- Vergleichen eines Gütesollwerts mit dem Güteistwert,
- Reduzieren einer Vorschubgeschwindigkeit und/oder Beschleunigung und/oder Rucks der Maschinenachse und/oder des Tool Center Points, wenn eine definierte Abweichung des Güteistwerts vom Gütesollwert überschritten wird oder Hinterlegen einer Information darüber, dass die definierte Abweichung des Güteistwerts vom Gütesollwert überschritten wurde, wenn die definierte Abweichung des Güteistwerts vom Gütesollwert überschritten wird.

So kann eine feine Bearbeitung in Echtzeit sichergestellt werden oder eine hohe Genauigkeit durch eine bereichsgenaue bzw. punktgenaue Nachbearbeitung erreicht werden, da Informationen dazu vorhanden sind.

Vorteilhaft ist das Verfahren mit folgendem weiteren Schritt: - Erhöhen einer Vorschubgeschwindigkeit und/oder Beschleunigung und/oder Rucks des Tool Center Points, wenn die definierte Abweichung oder eine weitere definierte Abweichung des Güteistwerts vom Gütesollwert unterschritten wird.

In anderen Worten bedeutet dies vorteilhaft: Wenn die definierte Abweichung überschritten wird, erfolgt das beschriebene Reduzieren. Dadurch wird die Genauigkeit verbessert. Dies geht mit einer Verbesserung bzw. Angleichung des Güteistwerts in Richtung des Gütesollwerts einher. Wird die definierte Abweichung bzw. weitere definierte Abweichung unterschritten, erfolgt das beschriebene Erhöhen.

Vorzugsweise ist hierbei die weitere definierte Abweichung ausschlaggebend für das Erhöhen, um ein ständig abwechselndes Reduzieren und Erhöhen der Vorschubgeschwindigkeit und/oder Beschleunigung und/oder Rucks zu vermeiden.

Vorteilhaft ist eine Ausführungsform, wonach der Gütesollwert und/oder die definierte Abweichung und/oder die weitere definierte Abweichung in einem Teileprogramm hinterlegt werden und/oder in eine Steuerung der Werkzeug- und/oder Produktionsmaschine, insbesondere numerische Steuerung, eingegeben werden.

Die Werte können somit vorher wie auch direkt im Betrieb, insbesondere durch einen Anwender an der Maschine, eingegeben werden.

Eine Hinterlegung in der Steuerung ist hierbei, bspw. durch den Anwender, meist nicht veränderbar, eine Hinterlegung im Teileprogramm ermöglicht hierbei eine Änderung während des Betriebs.

Vorteilhaft ist eine Ausführungsform, wonach der Lageistwert und/oder die Istgeschwindigkeit und/oder die Istbeschleunigung mittels wenigstens eines Messsystems erfasst werden.

Die möglichen Messsysteme werden weiter unter erläutert.

Vorteilhaft ist eine Ausführungsform, wonach eine Messfrequenz des Lageistwerts und/oder der Istgeschwindigkeit und/oder der Istbeschleunigung wenigstens 500/s höchstens 1500/s, vorzugsweise wenigstens 800/s und höchstens 1200/s, insbesondere 1000/s, ist.

Dadurch wird eine ausreichend gute und genaue Messung erreicht.

Vorteilhaft ist eine Ausführungsform, wonach der Lageistwert durch einen in bzw. an der Werkzeug- und/oder Produktionsmaschine angeordneten Drehgeber und /oder einen in bzw. an der Werkzeug- und/oder Produktionsmaschine angeordneten Linearmaßstab erfasst wird.

Vorzugsweise wird der Lageistwert über einen Glasmaßstab oder ein anderes Längenmessgerät erfasst. Auch andere optische Messsysteme sind denkbar.

Der Linearmaßstab, insbesondere Glasmaßstab, ist meist in einer gewissen Entfernung von der Wirkstelle, also dem Tool Center Point (kurz: TCP), angeordnet.

Vorteilhaft ist eine Ausführungsform, wonach die Istgeschwindigkeit und/oder die Istbeschleunigung durch wenigstens einen Sensor erfasst wird, wobei der Sensor am oder nahe am Tool Center Point angeordnet ist oder an oder nahe an einem Werkstück, welches durch die Werkzeug- und/oder Produktionsmaschine bearbeitet wird.

Vorzugsweise ist der Sensor zur Messung der Istbeschleunigung ein Beschleunigungsaufnehmer. Dieser misst vorteilhaft die Beschleunigung in wenigstens eine oder drei Raumrichtungen.

Der Sensor zur Messung der Istbeschleunigung ist vorteilhaft in der Nähe des TCP angeordnet, beispielsweise in der Nähe eines Fräskopfes.

Der Sensor zur Messung der Istgeschwindigkeit ist vorteilhaft in der Nähe des TCP angeordnet.

Alternativ ist eine Berechnung der Istgeschwindigkeit am TCP aus Lageistwert und Istbeschleunigung möglich.

Vorteilhaft wird dort bzw. zumindest in der Nähe gemessen, wo eine Schwingung auftritt. Eine Schwingung, die durch das beschriebene Verfahren vermieden bzw. reduziert werden soll, kann auf TCP-Seite wie auch auf Seiten des Werkstücks auftreten.

Die Lösung der Aufgabe gelingt zudem durch eine Steuerung für eine Werkzeug- und/oder Produktionsmaschine.

Die Lösung der Aufgabe gelingt ferner durch ein Computerprogrammprodukt, umfassend Befehle, die bei der Ausführung des Programms durch die Steuerung diese veranlassen, das Verfahren auszuführen.

Die Erfindung bietet den Vorteil, dass für den Schlichtvorgang nicht dauerhaft der Ruck und ggf. die Beschleunigung der am Schlichtvorgang beteiligten Achsen der Werkzeugmaschine reduziert werden müssen, um eine verminderte Anregung mechanischer Schwingungen der Werkzeug- und/oder Produktionsmaschine zu erreichen. Es kann dynamisch agiert werden. Dadurch wird eine Bearbeitungszeit eines Werkstücks auf der Werkzeug- und/oder Produktionsmaschine verkürzt. Die Kosten werden dadurch verringert und eine Durchlaufzeit verkürzt.

Im Folgenden wird die Erfindung anhand der in den Figuren gezeigten Ausführungsbeispiele näher beschrieben und erläutert.

Es zeigen:
- FIG 1: ein System, aufweisend eine Werkzeug- und/oder Produktionsmaschine und eine Steuerung,
- FIG 2: eine Bearbeitung eines Werkstücks,
- FIG 3: Verfahrensschritte,
- FIG 4: eine beispielhafte Ausführung des Verfahrens,
- FIG 5: eine weitere mögliche Werkzeug- und/oder Produktionsmaschine,
- FIG 6: eine weitere mögliche Werkzeug- und/oder Produktionsmaschine.

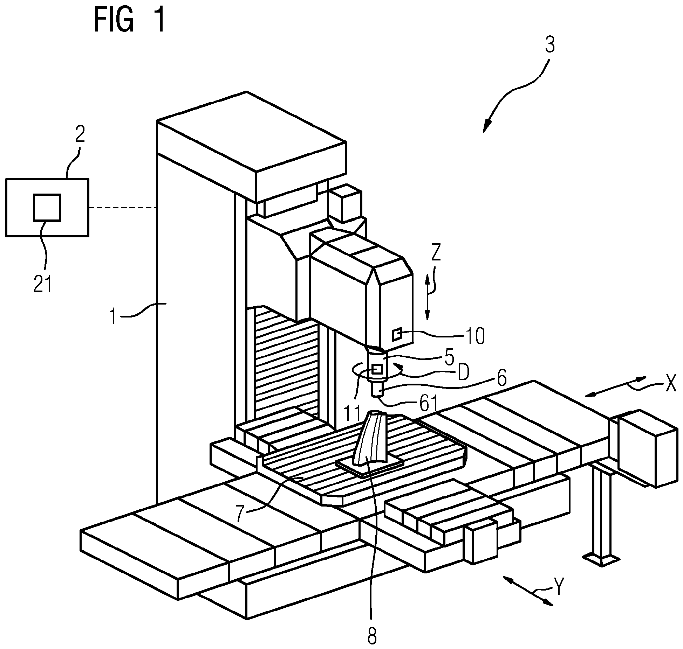

FIG 1 zeigt eine Werkzeug- und/oder Produktionsmaschine 1 und eine Steuerung 2. Sie bilden ein System 3. Die Werkzeug- und/oder Produktionsmaschine 1 umfasst in der Figur eine Spindel 5, an welcher ein Werkzeug 6 (in der Figur für eine Fräsbearbeitung) befestigt ist.

Eine Spindelrotation (und somit eine Rotation des Fräswerkzeugs) ist in der Figur mit D gekennzeichnet.

Eine Werkzeugspitzt bzw. ein Eingriffspunkt des Werkzeugs 6 wird vorteilhaft über einen Tool Center Point 61 (kurz: TCP) beschrieben. Der Tool Center Point 61 befindet sich in der Figur an einer Werkzeugspitze.

Auf einem Arbeitstisch 7 befindet sich in der Figur ein Werkstück 8. Das Werkzeug 6 dient vorteilhaft einer Bearbeitung des Werkstücks 8.

Die Figur zeigt ein Mittel zur Erfassung eines Lageistwerts 10 des TCP 61, beispielsweise in Form eines Drehgebers oder Linearmaßstabs.

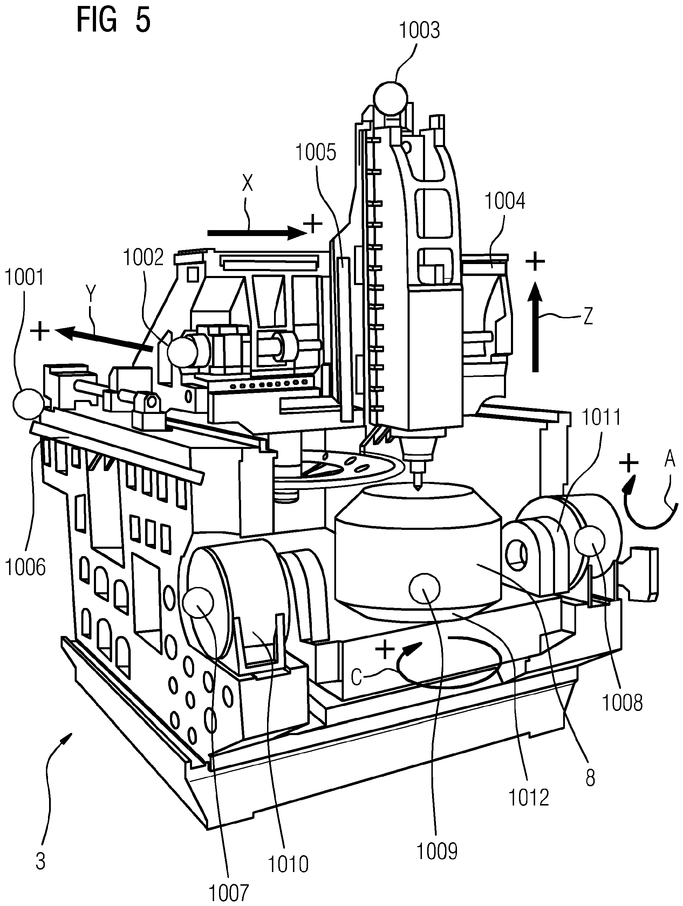

Die Anordnung des Mittels zur Erfassung des Lageistwerts 10 ist in dieser Figur rein exemplarisch gezeigt. Es wird auf die Ausführungen zu FIG 5 verwiesen.

Eine Istgeschwindigkeit und/oder eine Istbeschleunigung des TCP 61 wird in der Figur durch einen Sensor 11 erfasst. Der Sensor 11 ist in der Figur am bzw. nahe am Tool Center Point 61 angeordnet. Auch in der Nähe des Mittels zur Erfassung 10 kann der Sensor 11 angeordnet sein.

Der Sensor 11 kann auch an oder nahe an dem Werkstück 8, welches durch die Werkzeug- und/oder Produktionsmaschine 1 bearbeitet wird, angeordnet sein.

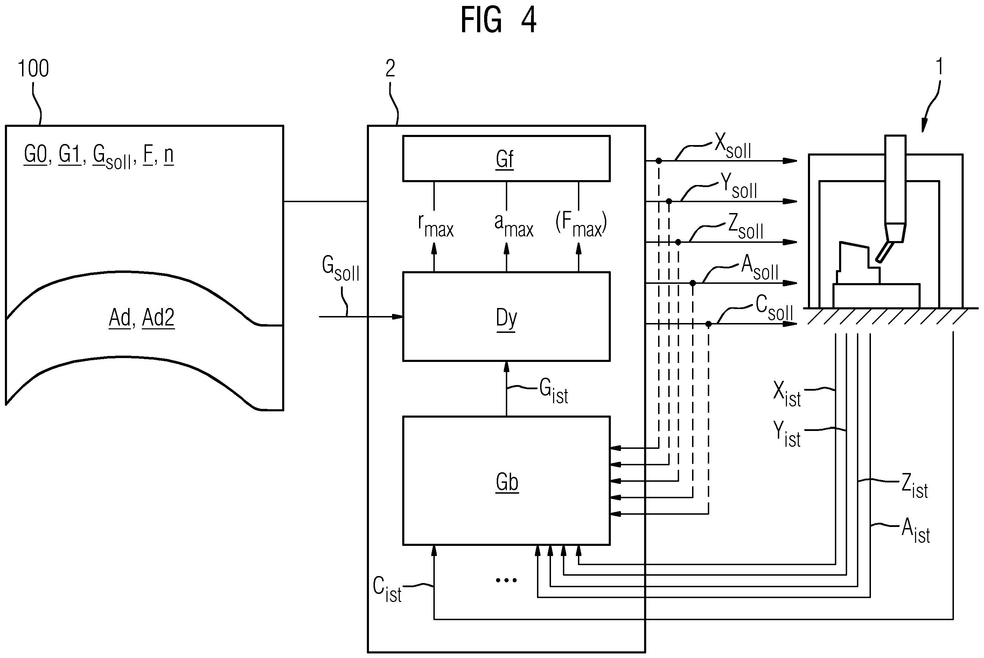

Die Steuerung 2, insbesondere als numerische Steuerung ausgebildet, weist in der Figur ein Computerprogrammprodukt 21 auf. Das Computerprogrammprodukt 21 umfasst Befehle, die bei der Ausführung des Programms durch die Steuerung 2 die Steuerung 2 veranlassen, das in FIG 4 beschriebene Verfahren auszuführen.

Das Computerprogrammprodukt 21 ist hierzu vorteilhaft in der Steuerung hinterlegt.

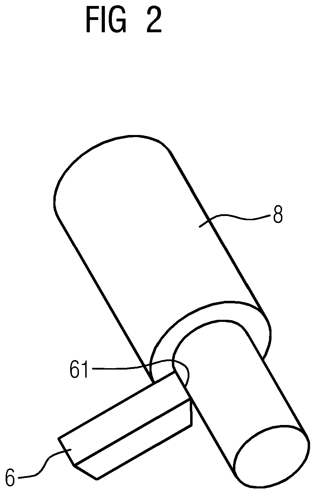

FIG 2 zeigt die Bearbeitung des Werkstücks 8, insbesondere eine Fräsbearbeitung.

Das Werkzeug 6 trägt in der Figur Material ab. An der Spitze des Werkzeugs ist der TCP 61 angeordnet.

Die Erfindung eignet sich gut für Verfahren, bei welchen Material abgetragen wird. Auch andere Anwendungen sind möglich.

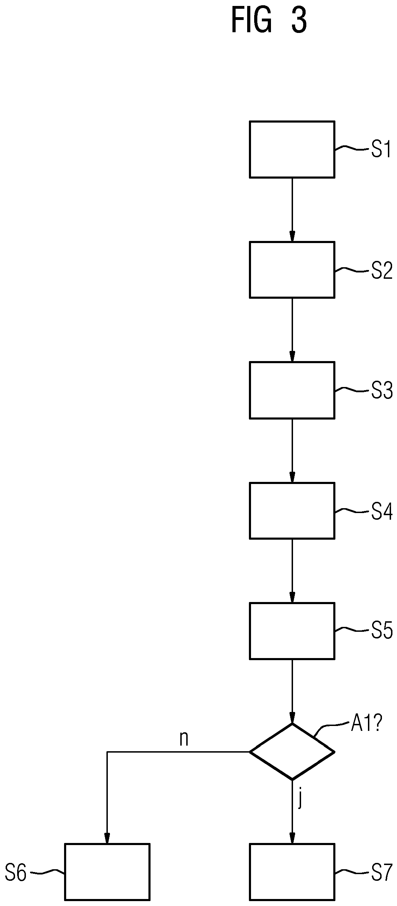

FIG 3 zeigt Verfahrensschritte des Verfahrens zum Betreiben einer Werkzeug- und/oder Produktionsmaschine.

In einem Verfahrensschritt S1 erfolgt ein Vergleichen wenigstens eines Lagesollwerts des Tool Center Points 61 mit einem Lageistwert des Tool Center Points 61.

Der Lagesollwert ist vorteilhaft vorgegeben und in der Steuerung 2 hinterlegt bzw. vorhanden. Der Lagesollwert kann auch von der Steuerung berechnet werden. Der Lageistwert wird vorteilhaft gemessen, insbesondere mit dem Mittel zur Erfassung eines Lageistwerts 10.

In Verfahrensschritt S2 erfolgt ein Vergleichen wenigstens einer Sollgeschwindigkeit des Tool Center Points 61 mit einer Istgeschwindigkeit des Tool Center Points 61.

Vorteilhaft ist die Sollgeschwindigkeit vorgegeben und in der Steuerung 2 hinterlegt. Die Istgeschwindigkeit wird vorteilhaft mittels des Sensors 11 erfasst.

In einem Verfahrensschritt S3 erfolgt ein Vergleichen wenigstens einer Sollbeschleunigung des Tool Center Points 61 mit einer Istbeschleunigung des Tool Center Points 61.

Vorteilhaft ist die Sollbeschleunigung vorgegeben und in der Steuerung 2 hinterlegt. Die Istbeschleunigung wird vorteilhaft mittels des Sensors 11 erfasst.

Es ist möglich, die Verfahrensschritte S1, S2 und S3 nacheinander durchzuführen. Auch eine andere Reihenfolge der Verfahrensschritte ist möglich.

Ferner ist es auch möglich, nur einen oder zwei der genannten Verfahrensschritte durchzuführen.

In einem Verfahrensschritt S4 erfolgt ein Bilden eines Güteistwerts auf Basis des Vergleichs bzw. der Vergleiche.

Vorteilhaft ist der Güteistwert eine Zahl. Vorteilhaft ist der Gütesollwert eine Zahl.

In einem Verfahrensschritt S5 erfolgt ein Vergleichen eines Gütesollwerts mit dem Güteistwert.

Vorteilhaft ist der Gütesollwert bereits vorher definiert worden. Vorteilhaft ist der Gütesollwert in der Steuerung hinterlegt.

Der Gütesollwert ist vorteilhaft abhängig von einer beabsichtigten Genauigkeit.

In A1 erfolgt eine Abfrage, ob eine definierte Abweichung des Güteistwerts vom Gütesollwert überschritten wurde.

Vorteilhaft ist die definierte Abweichung bereits vorher definiert worden. Vorteilhaft ist die definierte Abweichung in der Steuerung hinterlegt.

Die definierte Abweichung und auch eine weitere definierte Abweichung sind vorteilhaft eine Zahl.

Wurde die definierte Abweichung nicht überschritten - mit n gekennzeichnet - erfolgen in Verfahrensschritt S6 keine Maßnahmen.

Wurde die definierte Abweichung überschritten - mit j gekennzeichnet - erfolgt in einem Verfahrensschritt S7 entweder ein Reduzieren einer Vorschubgeschwindigkeit und/oder Beschleunigung und/oder Rucks des Tool Center Points 61 (vorzugsweise in Echtzeit) oder ein Abspeichern bzw. Hinterlegen einer Information darüber, dass die definierte Abweichung des Güteistwerts vom Gütesollwert überschritten wurde.

Die Information ist von Vorteil, da dadurch bekannt gemacht wird, dass beispielsweise eine Nachbearbeitung an einer oder mehreren Stellen des Werkstücks 8 nötig ist.

Bei Unterschreitung erfolgt eine Erhöhung von Vorschubgeschwindigkeit, Beschleunigung und/oder Ruck, wie bereits weiter oben erläutert.

FIG 4 eine beispielhafte Ausführung des Verfahrens. Die Figur zeigt ein Nachführverfahren zur Erreichung einer vom Anwender vorgegebenen Bearbeitungsgüte.

Anwendervorgaben 100 sind in der Figur Vorgaben zur Bahn G0, G1, Vorschub F, Spindeldrehzahl n und Gütesollzahl, typischerweise in Form eines Teileprogramms. Ferner wird die definierte Abweichung Ad und zudem vorteilhaft eine weitere definierte Abweichung Ad2 vorgegeben.

Die Steuerung 2 analysiert vorteilhaft sowohl achs- als auch bahnbezogen die Abweichung von vorgegebenen Lagesollwerten Xsoll, Ysoll, Zsoll, Asoll und Csoll (Sollwerte der fünf Achsen) und am Messsystem gemessenen Lageistwerten Xist, Yist, Zist, Aist und Cist (Istwerte der fünf Achsen).

Ein Vergleich von Sollgeschwindigkeit mit Istgeschwindigkeit bzw. Sollbeschleunigung mit Istbeschleunigung gelingt analog zu dem dargestellten Verfahren basierend auf dem Vergleich von Lagesollwerten mit Lageistwerten.

Diese Analyse kann ebenfalls eine Abweichung von kommandierter und gemessener Geschwindigkeit oder Beschleunigung umfassen.

Dazu werden vorteilhaft sowohl die in der Maschine verbauten Drehgeber oder Linearmaßstäbe zur Erfassung von Lageistwerten verwendet als auch von zusätzlich nahe am TCP (Werkzeugseite) oder dem Werkstück (Werkzeugseite) angeordneten Sensoren zur Messung der Geschwindigkeit oder der Beschleunigung.

Auf Basis der Analyse vorgegebener Soll- und Istwerte bildet die Steuerung 2 eine Kenngröße zur Bestimmung der Güte einer Feinbearbeitung. Dieser ist der Güteistwert Gist. Zur Bestimmung des Güteistwertes Gist wird beispielsweise eine Signalverarbeitung der Soll- und Istwerte im Zeit- und/oder im Frequenzbereich vorgenommen. Dies gelingt im Block Güteberechnung Gb.

Am Beispiel der Lagewerte erläutert wird hierbei vorteilhaft ein Differenzsignal von Lagesollwerten und Lageistwerten über einen bestimmten Zeitraum, z. B. 1 s, ermittelt. Das Differenzsignal wird vorteilhaft üblichen Verfahren der Signalanalyse zugeführt. Diese basieren beispielsweise auf den bekannten Verfahren Mittelwertbildung, Berechnung einer Standardabweichung und/oder Frequenzanalyse.

Die Standardabweichung des Differenzsignals kann hierbei beispielsweise als Maß für den Güteistwert Gist fungieren. Neben der Standardabweichung können jedoch auch andere Größen aus der Signalanalyse einfließen (s. o.).

Ebenso können neben dem Differenzsignal von Lagesollwerten und Lageistwerten alternativ oder zusätzlich Differenzsignale von Sollgeschwindigkeit und Istgeschwindigkeit bzw. Sollbeschleunigung und Istbeschleunigung analysiert werden und entsprechend der oben genannten Signalanalyse in den Güteistwert einfließen.

Die beschriebene Signalanalyse wird vorteilhaft analog für weitere, vorzugsweise alle, Achsen durchgeführt sowie vorteilhaft für den TCP, und fließt vorteilhaft in den Güteistwert, beispielsweise mittels einer Gewichtung, ein

Für die Gütezahl ist in der Figur vom Anwender eine Zielgröße vorgegeben. Dies ist der Gütesollwert Gsoll. Gsoll ist entweder im Teileprogramm programmierbar oder über die Steuerung 2 eingebbar.

Verschiedene Materialien verlangen nach unterschiedlichen Gütesollwerten, um eine gute Bearbeitung zu erreichen. Der Gütesollwert ist vorteilhaft ein Wert, der auf Erfahrung (insbesondere durch Analyse von Werkstückoberflächen) aus vorausgehenden ähnlichen Bearbeitungen basiert.

Beispielsweise kann der Gütesollwert Gsoll bestimmt werden, indem mehrere Werkstückoberflächen betrachtet werden, wobei ein bei der Bearbeitung vorgelegener Güteistwert gem. oben beschriebenem Verfahren bestimmt wurde und somit bekannt ist, und die Werkstückoberflächen der betrachteten Werkstücke für gut befunden wurden.

Auf diese Weise kann der Gütesollwert Gsoll festgelegt werden.

Im gezeigten Verfahren modifiziert die Steuerung 2 zur Einstellung des Güteistwertes Gist auf den Gütesollwert Gsoll (siehe Dynamiknachführung Dy) die Dynamikparameter Ruck rmax und Beschleunigung amax der Steuerung **2.** In der Dynamiknachführung Dy wird hierbei überprüft, ob die definierte Abweichung Ad überschritten wird. Es kann auch geprüft werden, ob die definierte Abweichung unterschritten wird bzw. ob die weitere definierte Abweichung unterschritten wird.

In der Konsequenz werden durch das Verfahren vorteilhaft wesentliche Parameter einer Geschwindigkeitsführung Gf der Steuerung 2 kontinuierlich nachgeführt.

Statt einer kontinuierlichen Nachführung ist jedoch auch eine Umschaltung auf einen weiteren Parametersatz der Dynamikparameter möglich. Auf diese Weise kann die geforderte Oberflächengüte erreicht werden.

Ist es der Steuerung 2 möglich, durch Auswertung von Zerspanparametern den maximal möglichen Vorschub zu ermitteln, so kann neben der Modifikation von Ruck rmax und Beschleunigung amax auch der Vorschub Fmax modifiziert werden mit dem Ziel maximale Produktivität bei vorgegebener Güte zu erreichen.

Ein Erhöhen von rmax und amax wie auch Fmax, wenn die definierte Abweichung Ad oder die weitere definierte Abweichung Ad2 des Güteistwerts vom Gütesollwert unterschritten wird, ist zur Verkürzung einer Durchlaufzeit von Vorteil.

Die Erfindung bietet den Vorteil, dass steuerungsintern Bearbeitungssituationen erkannt werden, die zu einer Verringerung der Bearbeitungsgüte führen würden. Dies kann durch das beschriebene Verfahren gleich, vorteilhaft in Echtzeit, behoben werden. Alternativ kann eine Information darüber abgelegt werden, sodass eine Nachbearbeitung erfolgen kann.

Vorteilhaft erfolgt jedoch eine zeitnahe Reaktion zur Sicherstellung der Bearbeitungsgüte durch Modifikation der Dynamikparameter.

Ein steuerungsintegrierter Algorithmus, der die Dynamik und auch die (Vorschub-)Geschwindigkeit erhöht, sofern das Gütekriterium erfüllt ist und ein Werkzeug dies zulässt, ist ebenso von Vorteil.

FIG 5 zeigt eine geeignete Anordnung von Mitteln zur Erfassung von Lageistwerten.

Die Figur zeigt hierzu einen Drehgeber für Y-Achse 1001, einen Drehgeber für die X-Achse 1002 und einen Drehgber für die Z-Achse 1003.

Vorzugsweise ist ein Linearmaßstab für die X-Achse 1004 an und nahe an der gezeigten Stelle angeordnet. Vorzugsweise ist ein Linearmaßstab für die Z-Achse 1005 an und nahe an der gezeigten Stelle angeordnet. Vorzugsweise ist ein Linearmaßstab für die Y-Achse 1006 an und nahe an der gezeigten Stelle angeordnet.

Die Figur zeigt zudem die Drehachsen A und C. Diese ermöglichen ein Kippen des Werkstücks (z. B. mittels eines Dreh-Schwenk-Tischs).

Auch dieses Kippen kann durch Linearmaßstäbe 1010, 1011, 1012 erfasst werden oder auch durch Drehgeber 1007 bzw. alternativ oder zusätzlich 1008 (A-Achse) und 1009 (C-Achse).

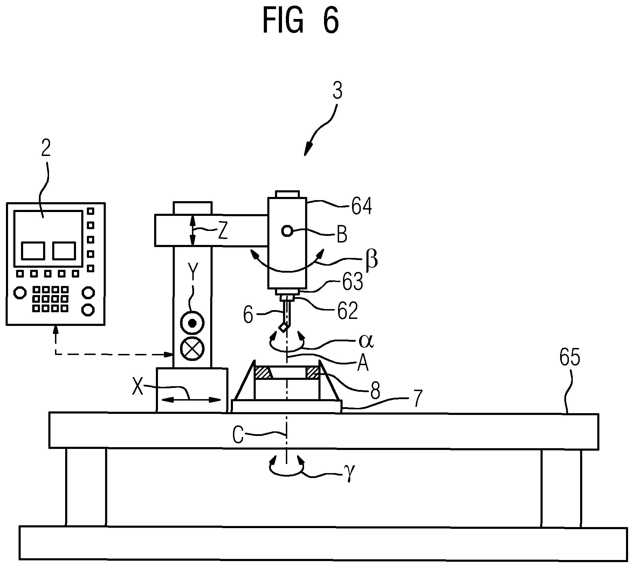

FIG 6 zeigt eine weitere mögliche Werkzeug- und/oder Produktionsmaschine 3, für die die Erfindung geeignet ist.

Die Werkzeug- und/oder Produktionsmaschine 3 verfügt im Rahmen dieses Ausführungsbeispiels über sechs Maschinenachsen X, Y, Z, A, B, C, durch die eine Relativbewegung zwischen dem Werkzeug 6, das im Rahmen dieses Ausführungsbeispiels in Form eines Drehmeißels vorliegt, und einem Werkstück 8 durchgeführt werden kann. Das Werkzeug 6 ist in dieser Figur in einen Werkzeughalter 62 eingespannt, der mit einer Werkzeugspindel 63 verbunden ist, die in dieses Ausführungsbeispiel von einem lagegeregelten Motor 64 angetrieben wird.

Das Werkzeug 6 kann vorteilhaft translatorisch in entlang der X-, Y- und Z-Achse bewegt werden.

Die Figur zeigt zudem Rundachsen A und B, mit denen das Werkzeug 6 um die jeweilige Achse gedreht und ebenfalls lagegeregelt durch die Winkellagen α und β relativ zu dem Werkstück 8 ausgerichtet werden kann.

Darüber hinaus verfügt die Maschine 3 in diesem Ausführungsbeispiel über eine dritte lagegeregelte Rundachse C, die parallel zur Z-Achse verläuft, und bezüglich der der Arbeitstisch 7 relativ zu einem ruhenden Maschinengestell 65 drehbar gelagert ist. Dadurch kann das Werkstück 8 auch in einer Winkellage γ relativ zu dem Werkzeug 1 positioniert werden.

## Patentansprüche

1. Verfahren zum Betreiben einer Werkzeug- und/oder Produktionsmaschine (1) mit folgenden Schritten:
- Vergleichen wenigstens eines Lagesollwerts (Xsoll, Ysoll, Zsoll, Asoll, Csoll) einer Maschinenachse (A, B, C, X, Y, Z) und/oder eines Tool Center Points (61) mit einem Lageistwert (Xist, Yist, Zist, Aist, Cist) und/oder
- Vergleichen wenigstens einer Sollgeschwindigkeit der Maschinenachse und/oder des Tool Center Points (61) mit einer Istgeschwindigkeit und/oder
- Vergleichen wenigstens einer Sollbeschleunigung der Maschinenachse und/oder des Tool Center Points (61) mit einer Istbeschleunigung,
- Bilden mindestens eines Güteistwerts (Gist) auf Basis des Vergleichs bzw. der Vergleiche, wobei ein Differenzsignal aus den Lagesollwerten und den Lageistwerten und/oder aus den Sollgeschwindigkeiten und den Istgeschwindigkeiten und/oder aus den Sollbeschleunigungen und den Istbeschleunigungen über einen bestimmten Zeitraum ermittelt und das Differenzsignal einem Verfahren einer Signalanalyse zugeführt werden, wobei anhand der Signalanalyse ermittelte Größen in den Güteistwert (Gist) einfließen,
- Vergleichen eines Gütesollwerts (Gsoll) mit dem Güteistwert,
- Reduzieren einer Vorschubgeschwindigkeit (Fmax) und/oder Beschleunigung (amax) und/oder Rucks (rmax) der Maschinenachse (A, B, C, X, Y, Z) und/oder des Tool Center Points, wenn eine definierte Abweichung (Ad) des Güteistwerts (Gist) vom Gütesollwert (Gsoll) überschritten wird oder Hinterlegen einer Information darüber, dass die definierte Abweichung (Ad) des Güteistwerts (Gist) vom Gütesollwert (Gsoll) überschritten wurde, wenn die definierte Abweichung (Ad) des Güteistwerts (Gist) vom Gütesollwert (Gsoll) überschritten wird.

2. Verfahren nach Anspruch 1, mit folgendem weiteren Schritt: - Erhöhen einer Vorschubgeschwindigkeit (Fmax) und/oder Beschleunigung (amax) und/oder Rucks (rmax) der Maschinenachse (A, B, C, X, Y, Z) und/oder des Tool Center Points, wenn die definierte Abweichung (Ad) oder eine weitere definierte Abweichung (Ad2) des Güteistwerts (Gist) vom Gütesollwert (Gsoll) unterschritten wird.

3. Verfahren nach einem der vorhergehenden Ansprüche, wobei der Gütesollwert (Gsoll) und/oder die definierte Abweichung (Ad) und/oder die bzw. eine weitere definierte Abweichung (Ad2) in einem Teileprogramm hinterlegt werden und/oder in eine Steuerung (2) der Werkzeug- und/oder Produktionsmaschine (1), insbesondere numerische Steuerung, eingegeben werden.

4. Verfahren nach einem der vorhergehenden Ansprüche, wobei der Lageistwert (Xist, Yist, Zist, Aist, Cist) und/oder die Istgeschwindigkeit und/oder die Istbeschleunigung mittels wenigstens eines Messsystems (10, 11) erfasst werden.

5. Verfahren nach einem der vorhergehenden Ansprüche, wobei eine Messfrequenz des Lageistwerts (Xist, Yist, Zist, Aist, Cist) und/oder der Istgeschwindigkeit und/oder der Istbeschleunigung wenigstens 500/s höchstens 1500/s, vorzugsweise wenigstens 800/s und höchstens 1200/s, insbesondere 1000/s, ist.

6. Verfahren nach einem der vorhergehenden Ansprüche, wobei der Lageistwert (Xist, Yist, Zist, Aist, Cist) durch einen in bzw. an der Werkzeug- und/oder Produktionsmaschine (1) angeordneten Drehgeber und /oder einen in bzw. an der Werkzeug- und/oder Produktionsmaschine angeordneten Linearmaßstab erfasst wird.

7. Verfahren nach einem der vorhergehenden Ansprüche, wobei die Istgeschwindigkeit und/oder die Istbeschleunigung durch wenigstens einen Sensor (11) erfasst wird, wobei der Sensor am oder nahe am Tool Center Point (61) angeordnet ist oder an oder nahe an einem Werkstück, welches durch die Werkzeug- und/oder Produktionsmaschine bearbeitet wird.

8. Steuerung (2) für eine Werkzeug- und/oder Produktionsmaschine (1) zur Durchführung des Verfahrens nach einem der Ansprüche 1 bis 7

9. Werkzeug- und/oder Produktionsmaschine (1), aufweisend eine oder verbunden mit einer Steuerung (2) nach Anspruch 8, insbesondere numerische Steuerung.

10. Computerprogrammprodukt (21), umfassend Befehle, die bei der Ausführung des Programms durch die Steuerung (2) nach Anspruch 8 diese veranlassen, das Verfahren nach einem der Ansprüche 1 bis 7 auszuführen.

## Claims

1. Method for operating a machine tool and/or production machine (1) with the following steps:
- comparing at least one target position value (Xtarget, Ytarget, Ztarget, Atarget, Ctarget) of a machine axis (A, B, C, X, Y, Z) and/or a tool centre point (61) with an actual position value (Xactual, Yactual, Zactual, Aactual, Cactual) and/or
- comparing at least one target speed of the machine axis and/or the tool centre point (61) with an actual speed and/or
- comparing at least one target acceleration of the machine axis and/or the tool centre point (61) with an actual acceleration,
- forming at least one actual quality value (Gactual) on the basis of the comparison or comparisons, wherein a difference signal is ascertained from the target position values and the actual position values and/or from the target speeds and the actual speeds and/or from the target accelerations and the actual accelerations over a specific period of time and the difference signal is fed to a signal analysis method, wherein variables determined using the signal analysis influence the actual quality value (Gactual),
- comparing a target quality value (Gtarget) with the actual quality value,
- reducing a feed speed (Fmax) and/or acceleration (amax) and/or jerk (rmax) of the machine axis (A, B, C, X, Y, Z) and/or the tool centre point if a defined deviation (Ad) of the actual quality value (Gactual) from the target quality value (Gtarget) is exceeded or storing information about the fact that the defined deviation (Ad) of the actual quality value (Gactual) from the target quality value (Gtarget) has been exceeded if the defined deviation (Ad) of the actual quality value (Gactual) from the target quality value (Gtarget) is exceeded.

2. Method according to claim 1, with the following further step:
- increasing a feed speed (Fmax) and/or acceleration (amax) and/or jerk (rmax) of the machine axis (A, B, C, X, Y, Z) and/or the tool centre point if the defined deviation (Ad) or a further defined deviation (Ad2) of the actual quality value (Gactual) from the target quality value (Gtarget) is fallen below.

3. Method according to one of the preceding claims, wherein the target quality value (Gtarget) and/or the defined deviation (Ad) and/or the or a further defined deviation (Ad2) are stored in a parts program and/or are entered into a control system (2) of the machine tool and/or production machine (1), in particular a numerical control system.

4. Method according to one of the preceding claims, wherein the actual position value (Xactual, Yactual, Zactual, Aactual, Cactual) and/or the actual speed and/or the actual acceleration are captured by means of at least one measuring system (10, 11).

5. Method according to one of the preceding claims, wherein a measuring frequency of the actual position value (Xactual, Yactual, Zactual, Aactual, Cactual) and/or the actual speed and/or the actual acceleration is at least 500/s, at most 1500/s, preferably at least 800/s and at most 1200/s, in particular 1000/s.

6. Method according to one of the preceding claims, wherein the actual position value (Xactual, Yactual, Zactual, Aactual, Cactual) is captured by a rotary transducer arranged in or on the machine tool and/or production machine (1) and/or a linear scale arranged in or on the machine tool and/or production machine.

7. Method according to one of the preceding claims, wherein the actual speed and/or the actual acceleration is captured by at least one sensor (11), wherein the sensor is arranged on or close to the tool centre point (61) or on or close to a workpiece, which is machined by the machine tool and/or production machine.

8. Control system (2) for a machine tool and/or production machine (1) for performing the method according to one of claims 1 to 7.

9. Machine tool and/or production machine (1), having a control system or connected to a control system (2) according to claim 8, in particular a numerical control system.

10. Computer program product (21) comprising instructions, which, when the program is executed by the control system (2) according to claim 8, cause it to execute the method according to one of claims 1 to 7.

## Revendications

1. Procédé pour faire fonctionner une machine-outil et/ou une machine (1) de production comprenant les stades suivants :
- comparaison d'au moins une valeur (Xsoll, Ysoll, Zsoll, Asoll, Csoll) de consigne de position d'un axe (A, B, C, X, Y, Z) de la machine et/ou d'un tool center point (61) à une valeur (Xist, Yist, Zist, Aist, Cist) réelle de position et/ou
- comparaison d'au moins une vitesse de consigne de l'axe de la machine et/ou du tool center point (61) à une vitesse réelle et/ou
- comparaison d'au moins une accélération de consigne de l'axe de la machine et/ou du tool center point (61) à une accélération réelle,
- formation d'au moins une valeur (Gist) de qualité sur la base de la comparaison ou respectivement des comparaisons, dans lequel on détermine, pendant un laps de temps déterminé, un signal de différence à partir des valeurs de consigne de position et des valeurs réelles de position et/ou à partir des vitesses de consigne et des vitesses réelles et/ou à partir des accélérations de consigne et des accélérations réelles et on envoie le signal de différence à un procédé d'analyse de signal, dans lequel, à l'aide de l'analyse du signal, des grandeurs déterminées à l'aide de l'analyse de signal entrent dans la valeur (Gist) réelle de qualité,
- comparaison d'une valeur (Gsoll) de consigne de qualité à la valeur réelle de qualité,
- réduction d'une vitesse (Fmax) d'avance et/ou d'une accélération (amax) et/ou d'une suraccélération (rmax) de l'axe (A, B, C, X, Y, Z) de la machine et/ou du tool center point, si un écart (Ad) défini de la valeur (Gist) réelle de qualité à la valeur (Gsoll) de consigne de qualité est dépassé, ou mise en mémoire, que l'écart (Ad) défini de la valeur (Gist) réelle de qualité à valeur (Gsoll) de consigne de qualité a été dépassé, si l'écart (Ad) défini de la valeur (Gist) de qualité à la valeur (Gsoll) de consigne de qualité est dépassé.

2. Procédé suivant la revendication 1, comprenant l'autre stade suivant :
- augmentation d'une vitesse (Fmax) d'avance et/ou d'une accélération (amax) et/ou d'une suraccélération (rmax) de l'axe (A, B, C, X, Y, Z) de la machine et/ou du tool center point, si on passe en dessous de l'écart (Ad) défini ou d'un autre écart (Ad2) défini de la valeur (Gist) réelle de qualité à la valeur (Gsoll) de consigne de qualité.

3. Procédé suivant l'une des revendications précédentes, dans lequel on met la valeur (Gsoll) de consigne de qualité et/ou l'écart (Ad) défini et/ou le ou un autre écart (Ad2) défini dans un programme de pièces et/ou on l'entre dans une commande (2) de la machine-outil et/ou de la machine (1) de production, en particulier dans une commande numérique.

4. Procédé suivant l'une des revendications précédentes, dans lequel on relève la valeur (Xist, Yist, Zist, Aist, Cist) réelle de position et/ou la vitesse réelle et/ou l'accélération réelle au moyen d'au moins un système (10, 11) de mesure.

5. Procédé suivant l'une des revendications précédentes, dans lequel une fréquence de mesure de la valeur (Xist, Yist, Zist, Aist, Cist) réelle de position et/ou de la vitesse réelle et/ou de l'accélération réelle est d'au moins 500/s d'au plus 1500/s, de préférence d'au moins 800/s et d'au plus 1200/s, en étant en particulier de 1000/s.

6. Procédé suivant l'une des revendications précédentes, dans lequel on relève la valeur (Xist, Yist, Zist, Aist, Cist) réelle de position par un codeur rotatif monté sur la machine-outil et/ou la machine (1) de production et/ou par une échelle graduée linéaire montée dans ou sur la machine-outil et/ou la machine de production.

7. Procédé suivant l'une des revendications précédentes, dans lequel on relève la vitesse réelle et/ou l'accélération réelle par au moins un capteur (11), dans lequel le capteur est monté sur ou près du tool center point (61) ou près d'une pièce, qui est usinée par la machine-outil et/ou la machine de production.

8. Commande (2) d'une machine-outil ou d'une machine (1) de production pour effectuer le procédé suivant l'une des revendications 1 à 7.

9. Machine-outil et/ou machine (1) de production comportant ou reliée à une commande (2) suivant la revendication 8, en particulier à une commande numérique.

10. Produit (21) de programme d'ordinateur comprenant des instructions qui, lors de l'exécution du programme par la commande (2) suivant la revendication 8, font que celles-ci exécutent le procédé suivant l'une des revendications 1 à 7.
